# EUROPEAN PATENT APPLICATION

(11) **EP 4 475 327 A1**
(43) Date of publication of application: **11.12.2024**
(21) Application number: 22961674.3
(22) Date of filing: 11.10.2022
(51) Int. Cl.: H01M 50/536

(54) **ADAPTER PLATE, BATTERY CELL, BATTERY AND ELECTRIC DEVICE**

(71) Applicant: Contemporary Amperex Technology Co., Limited, Jiaocheng District Ningde Fujian 352100 (CN)
(72) Inventor: YANG, Kaihuan, Ningde, Fujian 352100 (CN); WU, Ningsheng, Ningde, Fujian 352100 (CN); ZHOU, Wenlin, Ningde, Fujian 352100 (CN); ZHENG, Ting, Ningde, Fujian 352100 (CN); LIU, Wenzhong, Ningde, Fujian 352100 (CN); LI, Quankun, Ningde, Fujian 352100 (CN)
(74) Representative: Frick, Robert
(86) International application number: PCT/CN2022/124620
(87) International publication number: WO 2024/077480

(57) **Abstract**

The present disclosure discloses an adapting sheet, a battery cell, a battery, and an electric apparatus. The adapting sheet (100) includes a pole connection portion (110), a tab connection portion (120), and a bending portion (130). In a first direction, two sides of the pole connection portion (110) are respectively connected to the tab connection portion (120) through the bending portion (130). In a second direction, a height difference is formed between the pole connection portion (110) and the tab connection portion (120), and the first direction is non-parallel to the second direction. The adapting sheet (100) in the present disclosure is applied in the battery cell (10), so that the tab (232) may be disposed at both sides of the pole (220) in a width direction of the cell (10), which facilitates increasing a dimension of the tab (232) in a length direction of the battery cell (10), thereby improving fast-charging performance of the battery.

## Description

### FIELD

The present disclosure relates to the field of batteries, and in particular, to an adapting sheet, a battery cell, a battery, and an electric apparatus.

### BACKGROUND

With the growing importance people place on environmental protection, electric vehicles have rapidly emerged in the automotive industry owing to their energy-saving and environment-friendly advantages. The electric vehicle uses a battery as a power supply device. An adapting sheet is provided in the battery and is used for being connected to a pole and a tab in the battery. Therefore, the adapting sheet plays an important role in battery safety and power supply stability.

Since both the pole and the tab need to be connected to the adapting sheet, in the battery, the tab is located between the pole and an explosion-proof valve, i.e., making a dimension of the tab be limited to a distance between the explosion-proof valve and the pole. This limitation results in a small dimension of the tab in a length direction of a battery cell, thereby reducing the fast-charging performance of the battery.

### SUMMARY

In view of the above problems, the present disclosure provides an adapting sheet, a battery cell, a battery, and an electric apparatus, which can solve the problem of low fast-charging performance of the battery caused by limited tab dimension to some extent.

In a first embodiment, the present disclosure provides an adapting sheet, including: a pole connection portion; a tab connection portion; and a bending portion. In a first direction, two sides of the pole connection portion are respectively connected to the tab connection portion through the bending portion. In a second direction, a height difference is formed between the pole connection portion and the tab connection portion, and the first direction is non-parallel to the second direction.

In the technical solution according to the embodiments of the present disclosure, the connection sheet may be applied in a battery cell. After the connection sheet is assembled on the battery cell by adjusting an assembly angle, in the battery cell, a pole is spaced apart from an explosion-proof valve in a third direction. The first direction is perpendicular to the third direction. The second direction is consistent with a height direction of the battery cell and is perpendicular to the third direction. Since the tab connection portion is located at two sides of the pole connection portion in the first direction through the bending portion, in the battery cell where the adapting sheet is applied, a pole sheet may be disposed at both sides of the pole in the first direction. As the pole and the explosion-proof valve are disposed in the third direction in the battery cell, an arrangement position of the tab is not limited to a region between the explosion-proof valve and the pole. Therefore, a dimension of the tab in the third direction can be increased, to improve the fast-charging performance of the battery.

In some embodiments, the pole connection portion has a same thickness as the tab connection portion. The thickness of the pole connection portion is N1, in a height direction of the battery cell, the height difference between the pole connection portion and the tab connection portion is N2, where N1≤N2≤5* N1.

Since the height difference is formed between the pole connection portion and the tab connection portion, after the pole connection portion is connected to the pole, the tab connection portion is located at a position closer to an end cover plate of the battery cell, allowing the tab to be fixed in a position closer to the end cover plate. That is, after the tab is connected to the tab connection portion, a structure of the tab is at least partially located in an accommodation space created by the height difference between the tab connection portion and the pole connection portion, thereby saving a space in the housing. Therefore, an increase in a space available for accommodating a cell body is allowed, which is advantageous in improving battery capacity.

In some embodiments, a fusing portion is disposed between the pole connection portion and the tab connection portion and is configured to be fused during overcurrent of the adapting sheet.

The fusing portion is configured to fuse in a case of excessive current or a short circuit, serving to protect the battery.

In some embodiments, the fusing portion has at least one of a thinned region and a fusing hole.

By providing the thinned region or the fusing hole, an overcurrent area of the fusing portion is reduced, facilitating fusing of the fusing portion during overcurrent.

In some embodiments, the fusing portion is disposed at the bending portion.

The fusing portion is disposed at the bending portion, which allows for a more compact structure of the adapting sheet, thereby occupying small space.

In some embodiments, the fusing portion has a thinned region located at the fusing portion in an overcurrent direction of the fusing portion.

In this arrangement way, a thickness of the thinned region is smaller than thicknesses of other regions of the fusing portion, resulting in formation of a recess of the fusing portion in the thinned region. The recess provided in this direction enables a structural strength of the fusing portion to be stronger.

In some embodiments, the fusing portion has a thinned region with a thickness N3, a thickness of the pole connection portion is N1, where 1/3*N1≤N3≤5/6* N1.

In this arrangement way, the overcurrent area of the fusing portion is reduced by providing the thinned region with a small thickness, which facilitates the fusing of the fusing portion under excessive current. Within this dimension range, the structural strength of the fusing portion is enhanced on the basis of ensuring that the fusing portion can be normally fused.

In some embodiments, the fusing portion has a fusing hole, a total volume of an inner cavity of the fusing hole is V1, and a volume of the fusing portion is V2, where 1/6*V2≤V1≤2/3* V2.

In this configuration way, the fusing hole is provided to reduce the overcurrent area of the fusing portion, so that the fusing portion is convenient to fuse in the case of excessive current. Within the dimension range, the structural strength of the fusing portion is intensified while ensuring that the fusing portion can be normally fused.

In some embodiments, the adapting sheet further includes an insulator covering an outer side of the fusing portion.

The arrangement of the insulator may prevent the fusing portion from having a secondary lap joint after fusing.

In some embodiments, the pole connection portion has a first side surface configured to be connected to a pole, the pole connection portion has a second side surface facing away from the first side, and in the second direction, the insulator is disposed between the tab connection portion and a plane where the second side surface is located.

In this arrangement way, a height of the insulator does not exceed a height of the adapting sheet, which allows for a small space occupied by the insulator and is beneficial to saving an internal space of the battery cell.

In some embodiments, the fusing portion has at least one of a thinned region and a fusing hole, and the insulator includes a filling portion. The filling portion is located at an outer side of the thinned region or filled in an inner cavity of the fusing hole.

The structural arrangement of the insulator contributes to reinforcing the structural strength of the fusing portion through the insulator, thereby avoiding rupture caused by shaking or swaying of the fusing portion.

In some embodiments, an outer side wall of the insulator is provided with a reinforcement rib.

The structural strength of the insulator may be increased through the arrangement of the reinforcement rib, thereby enhancing stability of a connection between the pole connection portion and the tab connection portion.

In some embodiments, in a third direction, the tab connection portion has a length greater than or equal to a length of the pole connection portion. The third direction is perpendicular to both the first direction and the second direction.

The length of the tab connection portion may be set based on the dimension of the tab.

In some embodiments, in a third direction, the tab connection portion has a length greater than a length of the pole connection portion. The third direction is perpendicular to both the first direction and the second direction. The pole connection portion is connected to an end of the tab connection portion through the bending portion or connected to a middle part of the tab connection portion through the bending portion.

The length of the tab connection portion is set to be greater than the length of the pole connection portion, which is beneficial to connecting a tab with greater dimension through the tab connection portion.

In some embodiments, the bending portion is of an arc-shaped plate-like structure.

The bending portion of the arc-shaped plate-like structure can reduce an edge angle formed in the bending portion, thereby decreasing scrapes between other structures in the battery cell by the bending portion.

In some embodiments, the pole connection portion has a first side surface configured to be connected to a pole, the pole connection portion has a second side surface facing away from the first side, and the second side surface has a plurality of recesses.

In a process of welding the adapting sheet into the battery cell, the arrangement of the recesses can diminish reflection of a laser during welding.

In a second embodiment, the present disclosure also provides a battery cell, including the adapting sheet provided according to the above embodiments.

Since the battery cell includes the above-mentioned adapting sheet, all of the beneficial effects of the aforementioned adapting sheet are at least included, and details are omitted herein.

In some embodiments, the battery cell further includes: a housing; a cell assembly disposed in the housing and including a cell body and a tab extending from the cell body; and an end cover assembly covering an opening of the housing and including a pole. Each of two sides of the pole in a first direction is provided with a tab. A pole connection portion is electrically connected to the pole, and in the first direction, a tab connection portion at each of the two sides of the pole connection portion is electrically connected to the corresponding tab, respectively.

In the first direction, the tab connection portion of the adapting sheet is located at the two sides of the pole connection portion, and the tab is located at both sides of the pole. Therefore, the tab connection portion on the adapting sheet is disposed opposite to the tab, facilitating an electrical connection between the tab connection portion and the tab. Since the tabs are located at the two sides of the pole in the first direction, an arrangement dimension of the tabs along their path is not limited to a position of the pole. Consequently, the dimension of the tab along the path may be provided to be greater, thus improving the fast-charging performance of the battery.

In some embodiments, the end cover assembly further includes: an end cover plate covering the opening; and a plastic portion disposed at a side of the end cover plate facing the cell assembly. A first gap is formed between the tab connection portion and the plastic portion. A thickness of the pole connection portion is N1, and a dimension of the first gap is N4, where 0.1mm≤N4≤N1.

Since a gap exists between the tab connection portion and the plastic portion, it is convenient to avoid direct contact between the tab connection portion and the plastic portion. Within this range of gap, optimal utilization for the internal space of the housing is facilitated, which facilitates structural layout and prevents the adapting sheet from interfering with the plastic portion during assembly.

In some embodiments, the end cover assembly further includes an explosion-proof valve. The explosion-proof valve is spaced apart from the pole in a third direction. The explosion-proof valve is disposed at a middle of the end cover plate in the third direction. In the third direction, a distance between the pole and the explosion-proof valve is smaller than a minimum distance between the pole and a side edge of the cell body, and the third direction is perpendicular to both the first direction and a second direction.

In this arrangement way, the pole is disposed closer to the middle of the cell body, allowing for a greater space to be reserved at an outer side of the pole, thereby facilitating subsequent installation of a pressing strip.

In some embodiments, a dimension of the cell body in a third direction is L in the third direction perpendicular to both the first direction and a second direction, and a minimum distance between the pole and a side edge of the cell body is M in a length direction of the cell body, where L/30 ≤M≤L/5 or M> 10mm.

In this dimension range, the pressing strip can be added to constrain a position of a plurality of battery cells.

In a third embodiment, the present disclosure provides a battery, including: a case; the battery cell in the above embodiments that is disposed at the case.

Since the battery includes the battery cell, it at least includes all the beneficial effects of the foregoing battery cell, and details are omitted herein.

In a fourth embodiment, the present disclosure provides an electric apparatus, including: the battery cell according to the above embodiments, the battery cell is configured to provide electric energy; or the battery according to the above embodiments that is configured to provide electric energy.

Since the electric device includes the battery cell or the battery, it at least has all the beneficial effects of the battery cell or the battery, and details are omitted herein.

The above description is merely an overview of the technical solutions of the present disclosure. In order to more clearly understand the technical means of the present disclosure, the technical solutions to implement them based on the disclosure of the description and to clarify and explain the above and other emobdiments, features, and advantages of the present disclosure, specific embodiments of the present disclosure will be further described in detail.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals. In the accompanying drawings:
FIG. 1 is an exploded view of a structure of a battery cell according to some embodiments of the present disclosure.
FIG. 2 is a first schematic diagram showing a structure of an adapting sheet according to some embodiments of the present disclosure.
FIG. 3 is a schematic sectional diagram of a structure of an adapting sheet in a width direction of a battery cell according to some embodiments of the present disclosure.
FIG. 4 is a second schematic diagram showing a structure of an adapting sheet according to some embodiments of the present disclosure.
FIG. 5 is a third schematic diagram showing a structure of an adapting sheet according to some embodiments of the present disclosure.
FIG. 6 is a fourth schematic diagram showing a structure of an adapting sheet according to some embodiments of the present disclosure.
FIG. 7 is an exploded view of a structure of an adapting sheet and a structure of an insulator according to some embodiments of the present disclosure.
FIG. 8 is a first schematic diagram showing a structure of an adapting sheet provided with an insulator according to some embodiments of the present disclosure.
FIG. 9 is a schematic cross-sectional diagram of an adapting sheet provided with an insulator in a width direction of a battery cell according to some embodiments of the present disclosure.
FIG. 10 is a second schematic diagram showing a structure of an adapting sheet provided with an insulator in some embodiments of the present disclosure.
FIG. 11 is a fifth schematic diagram showing a structure of an adapting sheet according to some embodiments of the present disclosure.
FIG. 12 is a sixth schematic diagram showing a structure of an adapting sheet according to some embodiments of the present disclosure.
FIG. 13 is a schematic diagram of an assembly process of a battery cell according to some embodiments of the present disclosure.
FIG. 14 is a schematic cross-sectional diagram of a battery cell in a width direction according to some embodiments of the present disclosure.
FIG. 15 is a partially enlarged view at A in FIG. 14.
FIG. 16 is a vertical view of a battery cell according to some embodiments of the present disclosure.
FIG. 17 is a schematic diagram showing a structure of a battery according to some embodiments of the present disclosure.

Reference numerals in the embodiments are explained as follows:
10, battery cell; 20, pressing strip;
100, adapting sheet; 110, pole connection portion; 111, recess; 120, tab connection portion; 130, bending portion; 140, insulator; 150, fusing hole; 160, thinned region;
210, end cover plate; 211, plastic portion; 220, pole; 231, cell body; 232, tab; 240, first gap; 250, explosion-proof valve.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover nonexclusive inclusions.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "plurality" refers to more than two (including two).

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

With the increasing severity of environmental pollution and people's growing awareness of environmental protection, the rapid rise of the new energy industry has provided vast opportunities for the application and development of secondary batteries. Taking a lithium ion battery as an example, the lithium ion battery possesses high energy density, long cycle life, excellent charge and discharge rate performance, and other characteristics. As a result, the lithium ion battery has found widespread application in a variety of electronic devices. For example, the lithium ion battery is selected by mobile phones, laptops, electric tools, electric vehicles, and the like to serve as a power supply. The lithium ion battery used in the aforementioned electronic devices is commonly referred to as a power battery. The power battery generally includes a battery cell including an end cover plate and a cell body. A pole and an explosion-proof valve are provided on the end cover plate in a length direction of the end cover plate. A tab is provided on the cell body and is connected to the pole through an adapting sheet. The adapting sheet is used to prevent the battery from being damaged or other components from being burnt down when an electrode assembly is short-circuited or over-charged/over-discharged, thereby ensuring use safety of the battery. It is noted by the applicant that the current adapting sheet is typically of a flat shape. Since the pole protrudes downwards from the end cover plate, after a top surface of the adapting sheet is connected to the pole, a distance between the adapting sheet and the end cover plate is a distance of the pole protruding downwards from the end cover plate. Moreover, the tab needs to be connected to a bottom surface of the adapting sheet. In addition, the tab needs to be bent during assembling the cell body, so that an overall height of the tab in a direction perpendicular to the cover plate is increased by bending the tab, allowing for an increase in a distance between a top surface of the cell body and a bottom surface between the adapting sheets. Consequently, a space available within the housing for accommodating the cell body is reduced, and a volume of the cell body is positively correlated with a capacity of the battery cell.

In order to increase capacity of the battery cell, the applicant conducted research and found that it is possible to design the adapting sheet with a bent structure. This means that a height difference is formed between a part used for being connected to the tab and a part used for being connected to the pole, which allows a part of the adapting sheet used to be connected to the tab to be closer to the end cover plate after the adapting sheet is connected to the pole, thereby shortening the distance between the adapting sheet and the end cover plate. In this way, the connection position of the tab is closer to the end cover plate, which makes an internal structure of the battery cell more compact, providing a greater space for accommodating the cell body, thereby enabling the receiving of the cell body with a greater dimension. Therefore, the capacity of the battery cell is enhanced.

However, through further research, the applicant discovered that the adapting sheet is divided into two parts after being bent. A first part is used for being connected to the tab, and a second part is used for being connected to the pole. The first part and the second part extend in a length direction of the battery cell, i.e., extend in the length direction of the end cover plate. An explosion-proof valve is provided at a middle of the end cover plate and the pole is disposed at a side of the explosion-proof valve, allowing a connection region between the tab and the adapting sheet to be located between the pole and the explosion-proof valve after the adapting sheet is bent, i.e., needing a dimension of the tab in the length direction of the battery cell to be smaller than or equal to the distance between the pole and the explosion-proof valve. A length of the tab in the length direction of the battery cell is positively correlated with the fast-charging performance of the battery cell within a predetermined range. However, when the length of the tab in the length direction of the battery cell is limited by the distance between the pole and the explosion-proof valve, the fast-charging performance of the battery cell is constrained within the predetermined range and cannot be further improved.

Based on the above considerations, in order to solve a problem of limited fast-charging performance of the battery cell caused by the limited length of the tab in the length direction of the battery cell, the inventor has conducted in-depth research and designed an adapting sheet. For a relative position of the structure in the adapting sheet, there are three main directions: the first direction, the second direction, and the third direction, with each pair of directions being perpendicular to each other. The second direction may be understood as a thickness (or height) direction of the adapting sheet. Since the adapting sheet is applied in the battery cell, the first direction, the second direction, and the third direction also have correlations with a length direction, a width direction, and a height direction of the battery cell. The first direction is consistent with the width direction of the battery cell, the second direction is consistent with the height direction of the battery cell, and the second direction is consistent with the width direction of the battery cell.

In the present disclosure, for ease of description, the length direction, the width direction, and the height direction of the battery cell are defined as follows.

The length direction of the battery cell is defined as a direction in which the pole is spaced apart from the explosion-proof valve in the battery cell. In other words, when the pole is spaced apart from the explosion-proof valve in one direction of the battery cell, the direction is referred to as the length direction of the battery cell. The length direction of the battery cell is consistent with the third direction and is not limited to be necessarily greater than the width direction of the battery cell.

The width direction of the battery cell refers to a direction perpendicular to the length direction of the battery cell in a plane parallel to an end surface of the cell body protruding from the tab in the battery cell. The width direction of the battery cell is consistent with the first direction.

The height direction of the battery cell is a direction perpendicular to the plane parallel to the end surface of the cell body protruding from the tab. The end cover plate is disposed at an end of the battery cell in the height direction of the battery cell. The height direction of the battery cell is consistent with the second direction.

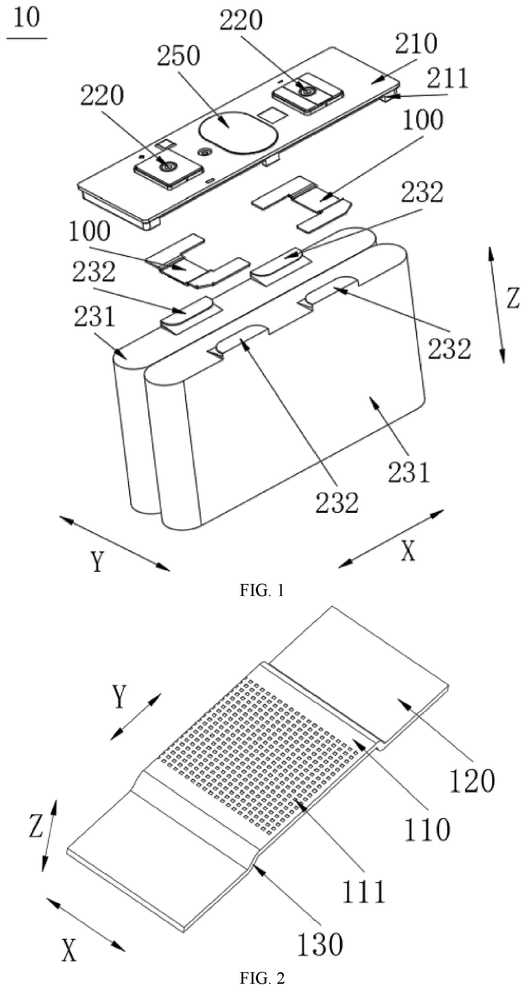

As illustrated in FIG. 1 to FIG. 17, the length direction and the third direction of the battery cell are both directions indicated by an arrow X, hereinafter referred to as a third direction (X direction). Both the width direction and the first direction of the battery cell are directions indicated by an arrow Y, hereinafter referred to as a first direction (Y direction). The height direction and the second direction of the battery cell are both directions indicated by an arrow Z, hereinafter referred to as a second direction (Z direction).

As illustrated in FIG. 1 and FIG. 2, the adapting sheet 100 includes a pole connection portion 110, a tab connection portion 120, and a bending portion 130. Two sides of the pole connection portion 110 in the first direction (Y direction) are respectively connected to the tab connection portion 120 through the bending portion 130. The tab connection portion 120 is electrically connected to the pole connection portion 110 through the bending portion 130. In the second direction (Z direction), a height difference is formed between the pole connection portion 110 and each tab connection portion 120. In the battery cell 10 using the adapting sheet 100, the tab 232 may be disposed at both sides of the pole 220 in the first direction (Y direction), so that an arrangement position of the tab 232 is not limited to a region between the explosion-proof valve 250 and the pole 220. Consequently, it is possible to increase a dimension of the tab 232 in the third direction (X direction) to improve the fast-charging performance of the battery.

The adapting sheet 100 disclosed in the embodiments of the present disclosure may be used in all batteries including the battery cell 10 and an electric device including the battery. However, its application is not limited solely to the battery cell 10. The adapting sheet 100 disclosed in the embodiments of the present disclosure may also be utilized for performing fuse protection on other products in the case of a short circuit or excessive current, and can increase flexibility and create more operational space for the design of the product.

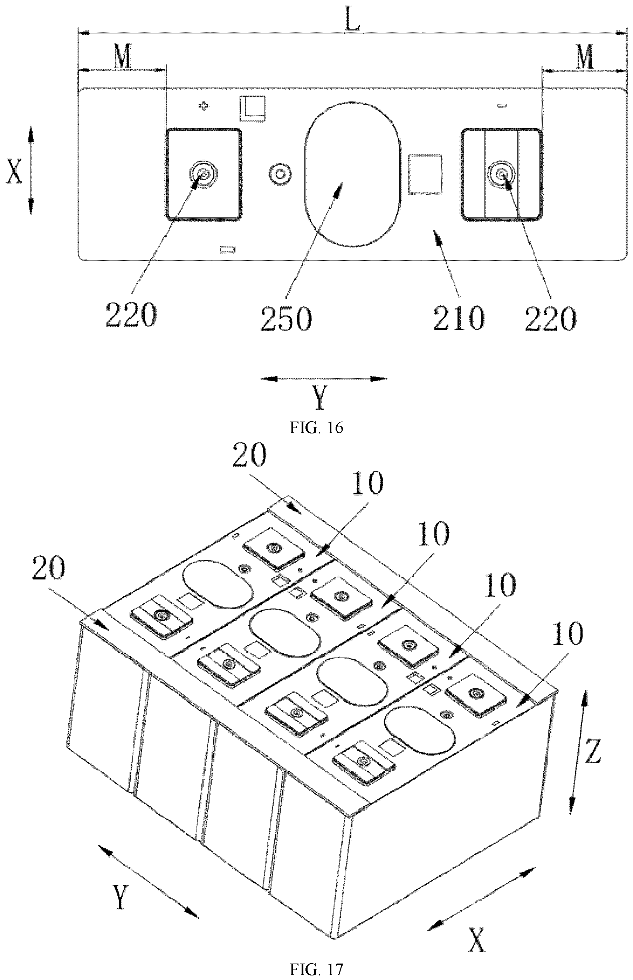

The battery cell 10 is a fundamental unit constituting the battery. As illustrated in FIG. 1 and FIG. 17, the battery cell 10 includes a housing (not shown), an end cover assembly, a cell assembly, an adapting sheet 100, and other functional components.

The housing is an assembly for engaging with the end cover assembly to form an internal environment of the battery cell 10. The formed internal environment is used to accommodate the cell assembly, an electrolyte, the adapting sheet 100, and other components.

The end cover assembly includes an end cover plate 210, a pole 220, and an explosion-proof valve 250. The end cover plate 210 refers to a component that covers an opening of the housing to isolate the internal environment of the battery cell 10 from an external environment. The explosion-proof valve 250 is configured to release internal pressure when internal pressure or an internal temperature of the battery cell 10 reaches a threshold. The pole 220 is configured to be electrically connected to the cell assembly to output or input an electric energy of the battery cell 10. The pole 220 includes a positive pole and a negative pole. In the length direction of the battery cell 10, the positive pole and the negative pole may be located at each of two sides of the explosion-proof valve 250, respectively. That is, the positive pole, the explosion-proof valve 250, and the negative pole are distributed at intervals in the length direction of the battery cell 10.

The cell assembly is a member in the battery cell 10 where an electrochemical reaction occurs. One or more cell assemblies may be included in the housing. The cell assembly is primarily formed by winding or stacking a positive electrode sheet and a negative electrode sheet. Typically, a separator is disposed between the positive electrode sheet and the negative electrode sheet. A cell body 231 of the cell assembly is composed of parts of the positive electrode sheet and the negative electrode sheet that have active materials, and the tab 232 is composed of parts of the positive electrode sheet and the negative electrode sheet that have no active materials. During charging and discharging of the battery, the active materials of the positive electrode and the negative electrode react with the electrolyte. The tab 232 is electrically connected to the pole 220 to form a current circuit. The tabs 232 includes a positive tab and a negative tab. The positive tab is configured to be connected to the positive pole, and the negative tab is configured to be connected to the negative pole.

Specifically, when the battery cell 10 is placed on a flat surface with the end cover plate 210 being located above, an up-down direction is the second direction (Z direction). In a plane where the end cover plate 210 is located, an arrangement direction of the explosion-proof valve 250 and the pole 220 is the third direction (X direction). The direction perpendicular to the length direction is the first direction (Y direction). The height direction, the width direction, and the length direction are perpendicular to each other.

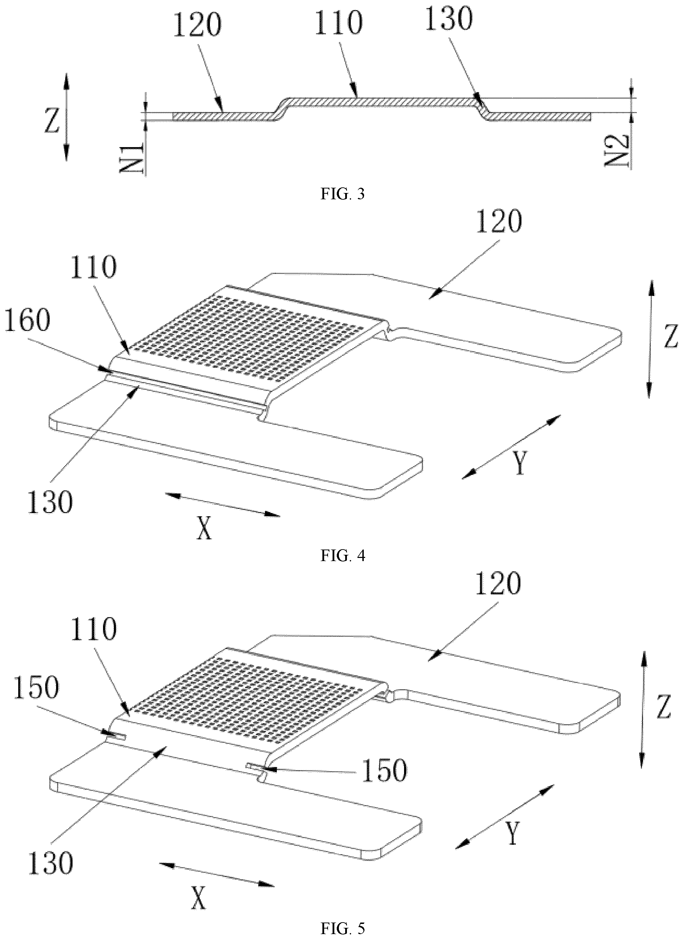

As illustrated in FIG. 2 and FIG. 3, an embodiment of the present disclosure provides an adapting sheet 100 for a battery cell 10. The adapting sheet 100 includes a pole connection portion 110, a tab connection portion 120, and a bending portion 130. Two ends of the pole connection portion 110 are respectively provided with the tab connection portion 120. The tab connection portion 120 is electrically connected to the pole connection portion 110 through the bending portion 130. The bending portion 130 is provided to be configured to create a height difference between the tab connection portion 120 and the pole connection portion 110 on the basis of making the tab connection portion 120 electrically connected to the pole connection portion 110.

The pole connection portion 110 is a structure in the adapting sheet 100 for being connected to the pole 220. The tab connection portion 120 is a structure in the adapting sheet 100 for being connected to the tab 232. The bending portion 130 is in a bent shape for connecting the tab connection portion 120 to the pole connection portion 110. The height difference refers to non-coplanarity between a top surface of the tab connection portion 120 and a top surface of the pole connection portion 110 in the height direction (Z direction) of the battery cell 10. When the adapting sheet 100 is applied in the battery cell 10, a distance between the top surface of the tab connection portion 120 and the end cover plate 210 of the battery cell 10 is smaller than a distance between the pole connection portion 110 and the end cover plate 210. The top surface of the tab connection portion 120 is a side surface of the tab connection portion 120 facing the end cover plate 210. The top surface of the pole connection portion 110 is a side surface of the pole connection portion 110 facing the end cover plate 210.

The tab connection portion 120, the pole connection portion 110, and the bending portion 130 may be integrally formed. For instance, a thin sheet-like structure is prepared through processes like stamping, bending, and cutting, to form an integrated tab connection portion 120, bending portion 130, and pole connection portion 110. Alternatively, the tab connection portion 120, the bending portion 130, and the pole connection portion 110 are respectively separate sheet materials, which are then spliced together to form the adapting sheet 100. A connection between the tab connection portion 120, the pole connection portion, and the bending portion 130 may be achieved through welding. The tab connection portion 120 and the pole connection portion 110 may be made from flat sheet materials having a same thickness. The bending portion 130 may be made of a sheet material having a same or thinner thickness as the tab connection portion 120.

Since the tab connection portion 120 is provided at each of two sides of the pole connection portion 110, the pole connection portion 110 has two sides each provided with the bending portion 130, to be connected to the tab connection portion 120 at the same side through the bending portion 130.

As illustrated in FIG. 1, in an optional implementation, the battery cell 10 includes two cell assemblies each including a tab 232. A tab 232 of one of the two cell assemblies includes a positive tab and a negative tab. The pole 220 includes a positive pole and a negative pole. The two positive tabs are disposed at two sides of the positive pole in the first direction (Y direction), and the two negative tabs are disposed at both sides of the negative pole in the first direction (Y direction).

Exemplarily, the adapting sheet 100 includes one pole connection portion 110, two bending portions 130, and two tab connection portions 120. The one tab connection portion 120 is connected to a side of the pole connection portion 110 in the first direction (Y direction) through the bending portion 130, and the other tab connection portion 120 is connected to another side of the pole connection portion 110 in the first direction (Y direction) through another bending portion 130. When the adapting sheet 100 is used for being connected to the positive tab and the positive pole, the pole connection portion 110 is used for being connected to the positive pole, the one tab connection portion 120 is used for being connected to the positive tab of the one of cell assemblies, and the other tab connection portion 120 is used for being connected to the positive tab of the other cell assembly. When the adapting sheet 100 is used for being connected to the negative tab and the negative pole, the pole connection portion 110 is used for being connected to the negative pole, one tab connection portion 120 is used for being connected to the negative tab of one cell assembly, and the other tab connection portion 120 is used for being connected to the negative tab of the other cell assembly.

Exemplarily, the two bending portions 130 are the same in shape and are symmetrically disposed at both sides of the pole connection portion 110, allowing for an equal height difference between the pole connection portion 110 and the two tab connection portions 120. After the adapting sheet 100 is applied in the battery cell 10, two sub-tabs 232 that are correspondingly connected to the two tab connection portions 120 have an equal assembly height, which is capable of decreasing or avoiding tilting of the cell body 231, thereby facilitating saving an internal space of the housing.

Exemplarily, the connection between the tab connection portion 120 and the tab 232 may be accomplished through ultrasonic welding, and the connection between the pole connection portion 110 and the pole 220 may be achieved by means of laser welding.

By disposing the tab connection portion 120 at a side surface of the pole connection portion 110 in a width direction of the pole connection portion 110, when the adapting sheet 100 is applied in the battery cell 10, a pole sheet may be provided at the two sides of the pole 220 in the first direction (Y direction). Since the pole 220 and the explosion-proof valve 250 are disposed in the length direction in the battery cell 10, an arrangement position of the tab 232 is not limited to the region between the explosion-proof valve 250 and the pole 220, thereby allowing for an increase in the dimension of the tab 232 in the third direction (X direction), to improve the fast-charging performance of the battery.

In addition, since the height difference is formed between the tab connection portion 120 and the pole connection portion 110, when the adapting sheet 100 is applied in the battery cell 10, a distance between the tab connection portion 120 and the end cover plate 210 is closer, resulting in a smaller distance between the tab 232 connected to the tab connection portion 120 between the end cover plate 210. By providing the height difference between the tab connection portion 120 and the pole connection portion 110, the adapting sheet 100 wholly exhibits an overall bending structure, allowing for formation of a space for accommodating the tab 232. By taking a plane where a side surface of the pole connection portion 110 away from the end cover plate 210 is located as a reference surface, when there is no height difference between the tab connection portion 120 and the pole connection portion 110, after the tab connection portion 120 is connected to the tab 232, the tab 232 and the end cover plate 210 are respectively located at two sides of the reference surface, resulting in a far distance between the tab 232 and the end cover plate 210. In this way, an unoccupied space is formed at a periphery of the pole 220 and located between the reference surface and the end cover plate 210, leading to space waste to some extent. After the height difference is formed between the tab connection portion 120 in the adapting sheet 100 and the pole connection portion 110 through the bending portion 130, and after the tab connection portion 120 is connected to the tab 232, a structure of the tab 232 is at least partially located between the reference surface and the end cover plate 210, i.e., the structure of the tab 232 is partially located on the side of the pole 220, and the distance between the tab 232 and the end cover plate 210 is closer, such that when it is ensured that the tab 232 is connected to the pole 220 through the adapting sheet 100, by utilizing the space between the reference surface and the end cover plate 210 at the periphery of the pole 220, in the case of a constant internal space of the housing, an assembly body of the tab 232, the pole 220, and the adapting sheet 100 has a higher space utilization rate in the housing, creating more space for accommodating the cell body 231, thereby allowing for an increase in the dimension of the cell body 231. For example, the height of the cell body 231 is increased, thereby enhancing energy density of the battery cell 10.

In some embodiments of the present disclosure, as illustrated in FIG. 3, exemplarily, the pole connection portion 110 has a same thickness as the tab connection portion 120. The thickness of the pole connection portion 110 is N1, and the height difference between the pole connection portion 110 and the tab connection portion 120 is N2, where N1≤N2≤5* N1.

The thickness of the pole connection portion 110 is a length of the pole connection portion 110 in the second direction (Z direction), and the thickness of the tab connection portion 120 is a length of the tab connection portion 120 in the second direction (Z direction).

N1≤N2≤5* N1, i.e., the height difference between the pole connection portion 110 and the tab connection portion 120 is greater than the thickness of the pole connection portion 110 and smaller than five times the thickness of the pole connection portion 110. The height difference between the pole connection portion 110 and the tab connection portion 120 is within the above range. Therefore, on one hand, a space around the pole 220 can be effectively utilized to lower the distance between the tab 232 and the end cover plate 210, and on the other hand, interference between the tab connection portion 120 and the top cover plate can be avoided, thereby facilitating assembly.

In some embodiments of the present disclosure, exemplarily, a fusing portion is disposed between the pole connection portion 110 and the tab connection portion 120 and is configured to be fused during overcurrent of the adapting sheet 100. The overcurrent is that a current passing through the fusing portion exceeds a rated value or is referred to as an excessive current. The fusing portion melts during overcurrent, i.e., a disconnection is caused between the tab connection portion 120 and the pole connection portion 110. As a result, an electrical connection between the tab 232 and the pole 220 is interrupted, achieving an effect of preventing or mitigating a short-circuit hazard.

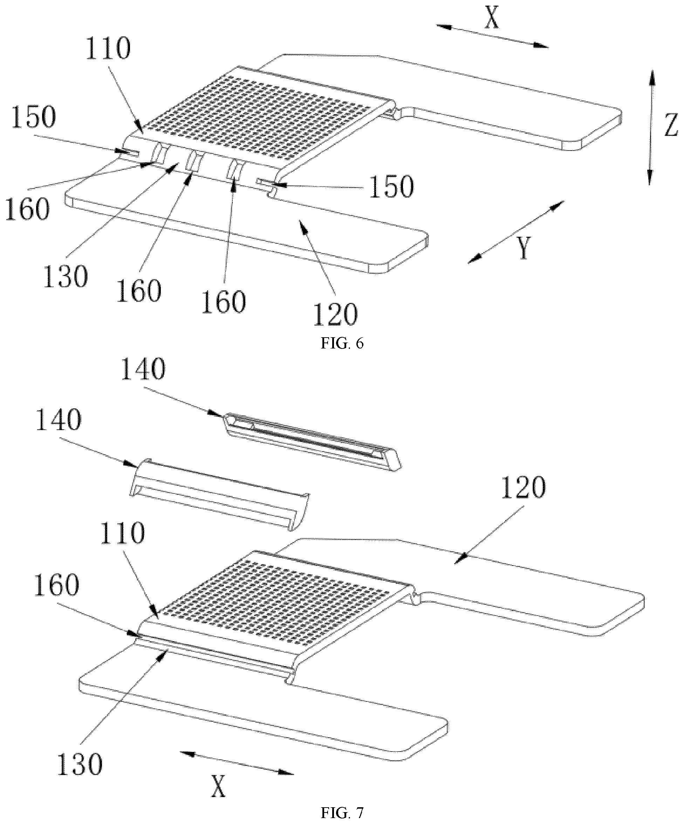

As illustrated in FIG. 4 to FIG. 6, in some embodiments, the fusing portion has at least one of a thinned region 160 and a fusing hole 150. That is, the fusing portion may only be provided with the thinned region 160 (as illustrated in FIG. 4), only be provided with the fusing hole 150 (as illustrated in FIG. 5), or be provided with the thinned region 160 and the fusing hole 150 (as illustrated in FIG. 6) concurrently.

The thinned region 160 is a region with a thickness smaller than the thickness of the tab connection portion 120. As an example, the tab connection portion 120, the bending portion 130, and the pole connection portion 110 have an equal thickness. During production-manufacturing, a sheet material is stamped or bent to form the tab connection portion 120, the bending portion 130, and the pole connection portion 110, the bending portion 130, the tab connection portion 120, and the pole connection portion 110 each have a thickness equal to a thickness of the sheet material. Then, a cutting operation is performed in the region between the tab connection portion 120 and the pole connection portion 110, to reduce a thickness of a specific region. As a result, a thickness of part of the structure is smaller than the thickness of the sheet material. A structure with a thickness smaller than the thickness of the sheet material is referred to as the thinned region 160, which has a smallest overflowing area. The number of thinned regions 160 provided in the fusing portion may be one or more. When a plurality of thinned regions 160 is provided, the plurality of thinned regions 160 is distributed at intervals in the fusing portion.

As illustrated in FIG. 4, one thinned region 160 is provided and penetrates the bending portion 130 in the length direction of the adapting sheet 100.

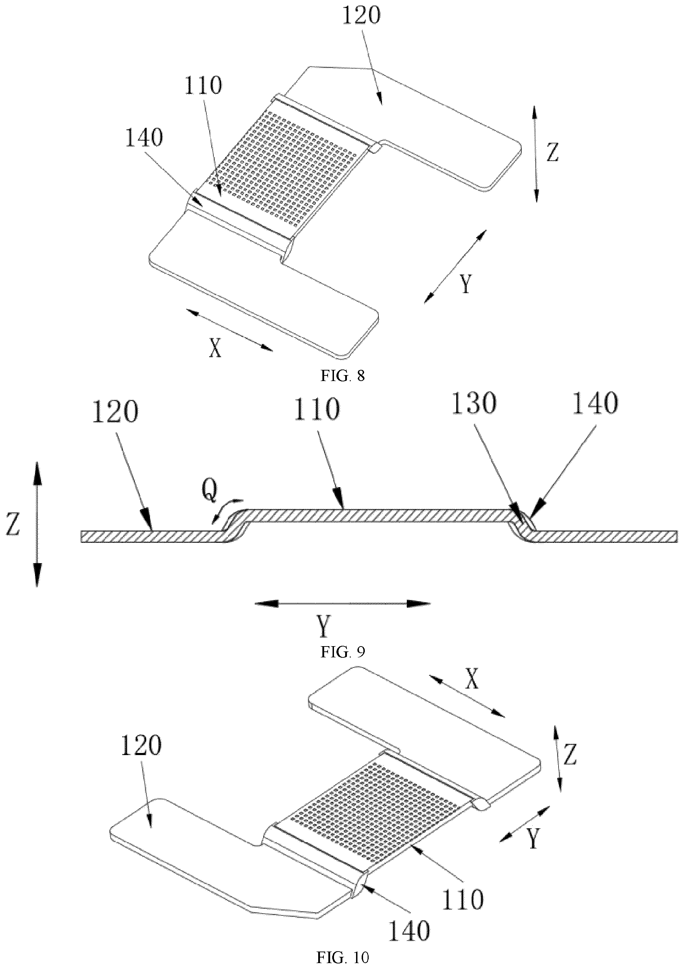

As illustrated in FIG. 6, the fusing portion has three thinned regions 160 and two fusing holes 150. The three thinned regions 160 are disposed in the length direction of the battery cell 10. Moreover, an extending direction of each of the three thinned regions 160 is an overcurrent direction of the fusing portion, i.e., a direction of the tab connection portion 120 close to the pole connection portion 110, or a direction of the pole connection portion 110 close to the tab connection portion 120. The adapting sheet 100 is projected in a plane parallel to the first direction (Y direction), and an extending direction of the fusing portion is the overcurrent direction of the fusing portion. As illustrated in FIG. 9, when the fusing portion is in an arc shape, the overcurrent direction (Q direction) of the fusing portion is also in an arc shape; and when the fusing portion is in a wavy shape, the wiring in the overcurrent direction of the fusing portion is also wavy.

The fusing hole 150 may be a through hole and is configured to decrease an overcurrent area of the fusing portion. The number of the fusing holes 150 provided in the fusing portion may be one or more, and they can have various shapes such as rectangular, circular, elliptical, or irregular. When there is a plurality of fusing holes 150, shapes of the different fusing holes 150 may be the same or different.

As illustrated in FIG. 5, exemplarily, the fusing portion of the adapting sheet 100 includes two fusing holes 150. The two fusing holes 150 are respectively located at each of two sides of the bending portion 130 in the length direction of the adapting sheet 100.

As illustrated in FIG. 6, exemplarily, the fusing portion of the adapting sheet 100 includes three thinned regions 160 and two fusing holes 150. The two fusing holes 150 are respectively located at each of two sides of the bending portion 130 in the length direction of the battery cell 10, and the three thinned regions 160 are arranged at intervals between the two fusing holes 150.

The fusing portion is configured to fuse in the event of excessive current or short circuit, providing protection for the battery. The overcurrent area of the fusing portion is smaller than an overcurrent area of the tab connection portion 120. The fusing portion reduces the overcurrent area by providing the at least one of the thinned region 160 and the fusing hole 150. Because the overcurrent area of the fusing portion is smaller than the overcurrent area of the tab connection portion 120, when the short circuit occurs in the battery, the fusing portion has highest resistance and generates the highest temperature due to a minimum overcurrent area. Consequently, when the current flowing through the adapting sheet 100 reaches a predetermined value, the adapting sheet 100 is instantaneously fused at the fusing portion, to disconnect the electrical connection between the tab 232 and the pole 220, serving to prevent or mitigate the hazards of short-circuit.

In some optional implementations, the fusing portion may be disposed between the bending portion 130 and the pole connection portion 110, or between the bending portion 130 and the tab connection portion 120.

Alternatively, in some embodiments of the present disclosure, exemplarily, the fusing portion is disposed at the bending portion 130, i.e., the at least one of the fusing hole 150 and the thinned region 160 is provided at the bending portion 130, allowing the bending portion 130 to form the fusing portion.

By disposing the fusing portion at the bending portion 130, it is possible to make the structure of the adapting sheet 100 more compact and occupy a smaller space.

In some embodiments of the present disclosure, exemplarily, the fusing portion has the thinned region 160 located at the fusing portion in the overcurrent direction of the fusing portion or extends from an end connected to the pole connection portion 110 to an end connected to the tab connection portion 120, or extends from an end connected to the tab connection portion 120 towards an end connected to the pole connection portion 110. For example, the thinned region 160 extends in the first direction (Y direction).

In this arrangement way, since the thickness of the thinned region 160 is smaller than that of other regions of the fusing portion, the fusing portion forms a recess in the thinned region 160. An extending direction of the recess is the first direction (Y direction). Compared with providing the recess in the third direction (X direction), the recess provided in the first direction (Y direction) enables a structural strength of the fusing portion to be stronger.

In some embodiments of the present disclosure, exemplarily, the fusing portion has a thinned region 160 with a thickness being N3, and a thickness of the pole connection portion 110 is N 1, where 1/3*N1≤N3≤5/6* N1. That is, the thickness of the thinned region 160 is in a range of one-third and five-sixths of the thickness of the pole connection portion 110. As the thickness of the thinned region 160 is equal to or smaller than five-sixths of the thickness of the pole connection portion 110, the thickness of the thinned region 160 is effectively lowered, thus decreasing the overcurrent area and facilitating fusing. Since the thickness of the thinned region 160 is equal to or greater than one-third of the thickness of the pole connection portion 110, the connection between the pole connection portion 110 and the tab connection portion 120 maintains, to provide a predetermined connection strength.

In this arrangement way, the overcurrent area of the fusing portion is reduced by providing the thinned region 160 having a small thickness, making it easier for the fusing portion to be fused when subjected to excessive current. Within this dimension range, the structural strength of the fusing portion is enhanced on the basis of ensuring that the fusing portion can be normally fused.

In some embodiments of the present disclosure, exemplarily, the fusing portion has a fusing hole 150. A total volume of an inner cavity the fusing hole 150 is V 1, and a volume of the fusing portion is V2, where 1/6*V2≤V1≤2/3* V2. When provided is only one fusing hole 150, the total volume of the inner cavity of the fusing hole 150 is V1. When provided is a plurality of fusing holes 150, the total volume of inner cavities of the plurality of fusing holes 150 is V1. With this arrangement, the overcurrent area of the fusing portion is decreased by providing one or more fusing holes 150, making the fusing portion fused in the case of excessive current. Within this dimension range, the structural strength of the fusing portion is enhanced on the basis of ensuring that the fusing portion can be normally fused.

As illustrated in FIG. 7 to FIG. 10, in some embodiments of the present disclosure, exemplarily, the adapting sheet 100 further includes an insulator 140 covering an outer side of the fusing portion.

The insulator 140 is a structure made of an insulating material that may be a ceramic material such as aluminum oxide, an organic material such as epoxy resin and poly (butyl acrylate), a mixed material, or other materials with insulating properties. The insulator 140 may be a separately manufactured sleeve-shaped structure that is sleeved at the outer side of the fusing portion. Alternatively, during production and manufacturing, the insulator 140 may be wrapped at the outer side of the fusing portion through injection molding. For example, the insulator 140 may be produced in the following manners. A mold for fabricating the insulator 140 includes a first mold and a second mold. The adapting sheet 100 without the insulator 140 is placed in the first mold. The second mold is engaged in the first mold. An injection molding recess is formed in each of the first mold and the second mold. An injection molding recess of the first module is in communication with an injection molding recess of the second mold to form an injection molding cavity. The fusing portion of the adapting sheet 100 is located in the injection molding cavity. The insulator 140 is formed by injection molding into the injection molding cavity, and the formed insulator 140 covers the outer side of the fusing portion. The insulator 140 formed by injection molding may allow a shape of an inner wall of the insulator 140 to match a shape of an outer wall of the fusing portion. For example, when the fusing portion has the fusing hole 150, injection molding liquid of the insulator 140 flows into and fills the fusing hole 150. When the fusing portion has the thinned region 160, the injection molding liquid of the insulator 140 flows into and fills the recess formed by the thinned region 160. In this arrangement way, the insulator 140 may enhance the structural strength of the region of the fusing portion and prevent fracture of the fusing portion due to shaking and swaying.

The arrangement of the insulator 140 may prevent the fusing portion from a secondary lap joint after fusing. Specifically, after the fusing portion is fused, the connection between the tab connection portion 120 and the pole connection portion 110 is disrupted, i.e., an interval is formed between the tab connection portion and the pole connection portion. As the insulator 140 envelops the outer side of the fusing portion, it keeps the tab connection portion 120 and the pole connection portion 110, which are divided into two independent parts after the fusion, in a spaced position. Therefore, the tab connection portion 120 and the pole connection portion 110 may be prevented from making contact during shaking and having the secondary lap j oint.

In some embodiments of the present disclosure, exemplarily, the pole connection portion 110 has a first side surface configured to be connected to a pole 220. The pole connection portion 110 has a second side surface facing away from the first side, and in the second direction (Z direction), the insulator 140 is disposed between the tab connection portion 120 and a plane where the second side surface is located.

In this arrangement way, a height of the insulator 140 does not exceed the height of the adapting sheet 100, allowing the insulator 140 to occupy a small space, which is beneficial to saving the internal space of the battery cell 10.

In some embodiments of the present disclosure, exemplarily, the fusing portion has at least one of a thinned region 160 and a fusing hole 150, and the insulator 140 includes a filling portion. The filling portion is located at an outer side of the thinned region 160 of the fusing portion or filled in an inner cavity of the fusing hole 150.

A structural arrangement of the insulator 140 facilitates enhancing the structural strength of the fusing portion through the insulator 140, thereby preventing the fracture of the fusing portion caused by shaking or movement

In some embodiments of the present disclosure, exemplarily, an outer side wall of the insulator 140 is provided with a reinforcement rib. The reinforcement rib may be formed by the outer side wall of the insulator 140 protruding outwards or may be a strip-shaped structure, a mesh-like structure, a blocky structure, or a granular structure embedded at a surface of the outer side wall of the insulator 140 and having a hardness greater than that of the insulator 140. The reinforcement rib and the insulator 140 may be of an integrated structure. The presence of the reinforcement ribs can improve the structural strength of the insulator 140, thereby enhancing stability of the connection between the pole connection portion 110 and the tab connection portion 120.

The reinforcement rib may be made of the same material as the insulator 140 or different materials from the insulator 140. When the reinforcement rib and the insulator 140 are made of the same material, they can be formed at the outer side of the fusing portion through injection molding. By modifying a cavity shape of the injection molding cavity of the mold for injection molding the reinforcement rib and the insulator 140, the insulator 140 and the reinforcement rib protruding from the outer side wall of the insulator 140 are formed after injection molding. When the reinforcement rib and the insulator 140 are made of different materials, the reinforcement rib may be prepared first, and then is disposed at an inner wall of the injection molding cavity of the mold, allowing the reinforcement rib to be embedded and fixed at the outer side wall of the insulator 140 after the insulator 140 is formed by injection molding.

In some embodiments of the present disclosure, exemplarily, in a third direction (X direction), the tab connection portion 120 has a length greater than or equal to a length of the pole connection portion 110.

The length of the tab connection portion 120 may be set according to the dimension of the tab 232.

As illustrated in FIG. 2, in some embodiments of the present disclosure, the tab connection portion 120 has the length equal to the length of the pole connection portion 110 in the third direction (X direction). In this arrangement way, the adapting sheet 100 may be manufactured by using a rectangular plate, which is bent or stamped to create a height difference between two ends of the rectangular plate and a middle of the rectangular plate. The two ends of the rectangular plate form the tab connection portions 120, and the middle of the rectangular plate forms the pole connection portion 110. A bending region between the tab connection portion 120 and the pole connection portion 110 is the bending portion 130. This manufacturing process for the adapting sheet 100 is straightforward, resulting in high manufacturing efficiency.

In some embodiments of the present disclosure, exemplarily, in the third direction (X direction), the tab connection portion 120 has a length greater than the length of the pole connection portion 110. The pole connection portion 110 is connected to an end of the tab connection portion 120 through the bending portion 130 or connected to a middle part of the tab connection portion 120 through the bending portion 130.

The length of the tab connection portion 120 is set to be greater than the length of the pole connection portion 110, which is advantageous to be connected to the tab 232 with a greater dimension through the tab connection portion 120.

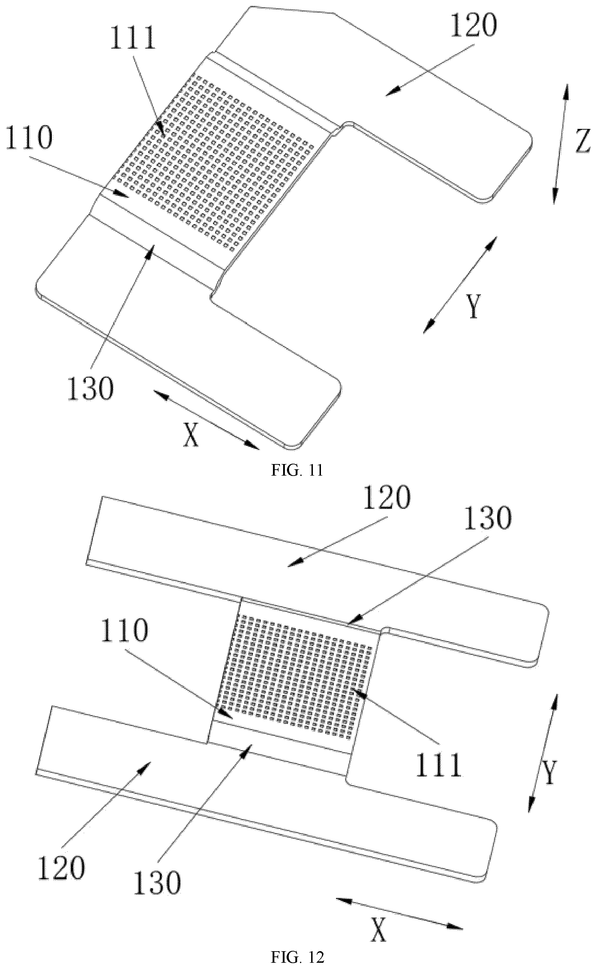

Exemplarily, as illustrated in FIG. 11, the tab connection portion 120 has a length greater than the length of the pole connection portion 110, and the pole connection portion 110 is connected to an end of the tab connection portion 120, allowing a vertical view of the adapting sheet 100 to be of a similar "Z" shape. In this arrangement way, the adapting sheet 100 can be manufactured by using the rectangular plate, which is bent or stamped to generate the height difference between the two ends of the rectangular plate and the middle of the rectangular plate. Then, a cut is made at a side of the middle of the rectangular plate, to remove a region at a side of the middle of the rectangular plate, thereby forming a " 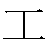 "-shape structure. The rest of parts after the cut in the middle of the structure is the pole connection portion 110, and two ends of the structure form the tab connection portion 120. The bending region between the tab connection portion 120 and the pole connection portion 110 is the bending portion 130.

As illustrated in FIG. 12, the tab connection portion 120 has a length greater than the length of the pole connection portion 110, and the pole connection portion 110 is connected to the middle part of the tab connection portion 120, so that the vertical view of the adapting sheet 100 is of a similar "Z" shaped structure. In this arrangement way, the adapting sheet 100 can be manufactured by using the rectangular plate, which is bent or stamped to generate the height difference between the two ends of the rectangular plate and the middle of the rectangular plate. Then, a cut is made at two sides of the middle of the rectangular plate, to remove a region at two sides of the middle of the rectangular plate, thereby forming a "concave"-shape structure. The rest of parts after the cut in the middle of the structure is the pole connection portion 110, and two ends of the structure form the tab connection portion 120. The bending region between the tab connection portion 120 and the pole connection portion 110 is the bending portion 130.

In some embodiments of the present disclosure, exemplarily, the bending portion 130 is of an arc-shaped plate-like structure. Exemplarily, an engagement between the bending portion 130 and the pole connection portion 110 is a curved surface, and an engagement between the bending portion 130 and the pole connection portion 110 is a curved surface. The bending portion 130 of the arc-shaped plate-like structure may reduce an edge angle formed in the bending portion 130, thereby reducing scrapes of other structures in the battery cell 10 by the bending portion 130.

In some embodiments of the present disclosure, the bending portion 130 may further adopt a plurality of structural forms such as a flat-plate-shaped structure and a wavy plate-shaped structure. When the bending portion 130 is of a flat-plate-shaped structure, after the bending portion 130 is manufactured, chamfers may be applied in the engagement between the bending portion 130 and the pole connection portion 110 and the engagement between the bending portion 130 and the tab connection portion 120. In this way, the engagement between the bending portion 130 and the pole connection portion 110 is the curved surface, and the engagement between the bending portion 130 and the pole connection portion 110 is the curved surface.

In some embodiments of the present disclosure, exemplarily, as illustrated in FIG. 12, the pole connection portion 110 a first side surface configured to be connected to a pole 220, the pole connection portion 110 has a second side surface facing away from the first side, and the second side surface has a plurality of recesses 111. The recess 111 is a structure recessed from the second side surface to the first side. The arrangement of the recesses 111 can increase roughness of the second side surface and enhance diffuse reflection of the second side surface, thereby reducing laser reflection during welding of the adapting sheet 100 and the pole connection portion 110.

As illustrated in FIG. 1, an embodiment of the present disclosure provides a battery cell 10, including the adapting sheet 100 provided in the above embodiments.

The battery cell 10 may be used in an electric apparatus using a battery as a power supply or various energy storage systems using the battery as an energy storage element.

Since the battery cell 10 includes the adapting sheet 100 provided in the above embodiments, the battery cell 10 has at least all beneficial effects of the adapting sheet 100, and details are omitted herein.

As illustrated in FIG. 1, and FIG. 13 to FIG. 16, the battery cell 10 further includes a housing (not shown), a cell assembly, and an end cover assembly. The cell assembly is disposed in the housing and includes a cell body 231 and a tab 232 extending from the cell body 231. The end cover assembly includes a pole 220 having two sides in the first direction (Y direction) each provided with the tab 232. The adapting sheet 100 is the adapting sheet 100 according to the above embodiments. The pole connection portion 110 of the adapting sheet 100 is electrically connected to the pole 220. In the first direction (Y direction), the tab connection portion 120 located at each of the two sides of the pole connection portion 110 in the adapting sheet 100 is electrically connected to the corresponding tab 232, respectively. In the width direction of the cell body 231, the tab connection portion 120 of the adapting sheet 100 is located at the two sides of the pole connection portion 110 in the first direction (Y direction), and the tabs 232 are located at the two sides of the pole 220 in the first direction (Y direction). Therefore, the tab connection portion 120 on the adapting sheet 100 is disposed opposite to the tab 232, facilitating the electrical connection.

As illustrated in FIG. 1, in an optional implementation, the battery cell 10 includes two cell assemblies each including a tab 232. The tabs 232 each include a positive tab and a negative tab. The pole 220 includes a positive pole and a negative pole. The two positive tabs are disposed at both sides of the positive pole, and the two negative tabs are disposed at both sides of the negative pole.

Exemplarily, the adapting sheet 100 includes a pole connection portion 110, two bending portions 130, and two tab connection portions 120. The one tab connection portion 120 is connected to a side of the pole connection portion 110 in the width direction of the pole connection portion 110 through the bending portion 130, and the other tab connection portion 120 is connected to the other side of the pole connection portion 110 in the width direction of the pole connection portion 110 through the other bending portion 130. When the adapting sheet 100 is used for being connected to the positive tab and the positive pole, the pole connection portion 110 is used for being connected to the positive pole. The one tab connection portion 120 is used for being connected to the positive tab of the one cell assembly, and the other tab connection portion 120 is used for being connected to the positive tab of the other cell assembly. When the adapting sheet 100 is used for being connected to the negative tab and the negative pole, the pole connection portion 110 is used for being connected to the negative pole, the one tab connection portion 120 is used for being connected to the negative tab of the one cell assembly, and the other tab connection portion 120 is used for being connected to the negative tab of the other cell assembly.

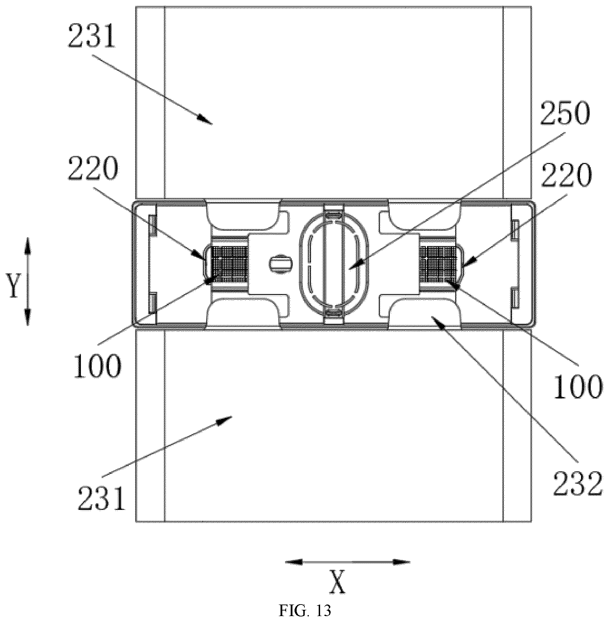

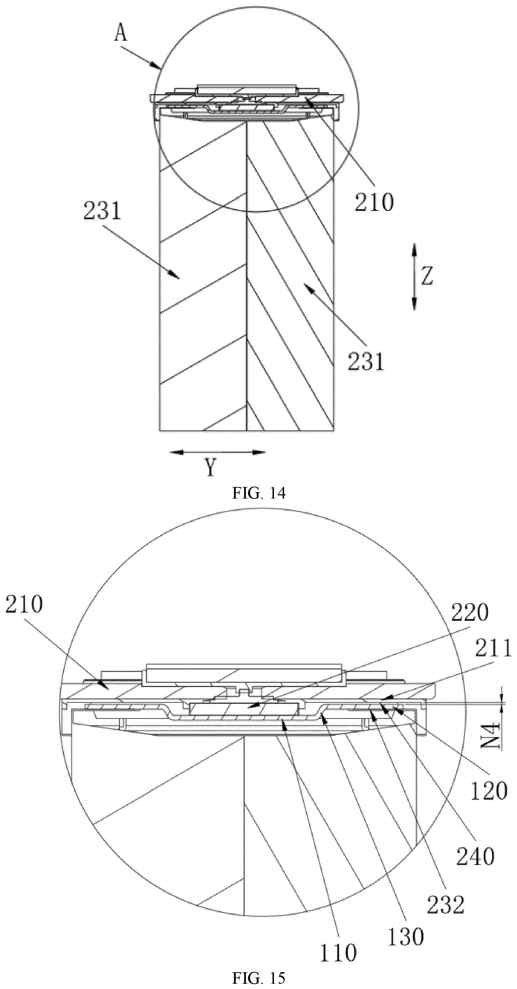

In the battery cell 10 illustrated in FIG. 13, the cell assembly and the adapting sheet 100 are in an assembling process. The two cell assemblies are located at each of the two sides of the end cover plate 210 in the width direction of the end cover plate 210, respectively. In this way, it is convenient for welding of un-bent tabs 232 and the adapting sheet 100 in the cell assembly. After completing welding between the adapting sheet 100 and the pole 220 and welding between the adapting sheet 100 and the tab 232, the two cell assemblies are symmetrically and oppositely flipped towards each other, allowing the two cell assemblies to be turned over to a position below the end cover plate 210 (as illustrated in FIG. 14). During the flipping, the tabs 232 are bent (as illustrated in FIG. 15), and the two cell assemblies are laminated to each other after being flipped.

In another optional implementation, the battery cell 10 includes four cell assemblies each including a tab 232. Each tab 232 includes a positive tab and a negative tab The pole 220 includes a positive pole and a negative pole. The two positive tabs are disposed at both sides of the positive pole, and the two negative tabs are disposed at both sides of the negative pole. The battery cell 10 includes two adapting sheets 100. The one adapting sheet 100 is used for being connected to the positive tab and the positive pole and can be made of an aluminum plate. The other adapting sheet 100 is used for being connected to the negative tab and the negative pole and can be made of a copper plate.

When the adapting sheet 100 is used for being connected to the positive tab and the positive pole, the pole connection portion 110 is used for being connected to the positive pole. The one tab connection portion 120 is used for being connected to the positive tabs of the two cell assemblies, and the other tab connection portion 120 is used for being connected to the positive tabs of another two cell assemblies. When the adapting sheet 100 is used for being connected to the negative tab and the negative pole, the pole connection portion 110 is used for being connected to the negative pole. The one tab connection portion 120 is used for being connected to the negative tabs of two cell assemblies, and the other tab connection portion 120 is used for being connected to the negative tabs of another two cell assemblies.

As illustrated in FIG. 15, in some embodiments of the present disclosure, exemplarily, the end cover assembly further includes: an end cover plate 210 covering the opening; and a plastic portion 211 disposed at a side of the end cover plate 210 facing the cell assembly. A first gap 240 is formed between the tab connection portion 120 and the plastic portion 211. A thickness of the pole connection portion 110 is N1, and a dimension of the first gap is N4, where 0.1mm≤N4≤N1.

The plastic portion 211 is a structure made of plastic material, which may be a plastic frame. The plastic portion 211 is disposed at a side of the end cover plate 210 located inside the housing, and the plastic frame is located between the end cover plate 210 and the cell assembly. The plastic portion 211 is configured to properly limit a position of the cell assembly, avoiding an excessive vertical or lateral movement of the cell assembly in the housing.

Since the first gap 240 is formed between the tab connection portion 120 and the plastic portion 211, it is convenient to prevent the tab connection portion 120 from being in direct contact with the plastic portion 211, thereby preventing the tab connection portion 120 from interfering with the plastic portion 211 during assembly. Exemplarily, an insulating layer may be provided at a side of the tab connection portion 120 facing the plastic portion 211. The first gap may be used to accommodate the insulating layer. The insulating layer may avert the tab connection portion 120 from contacting with the end cover plate 210, thereby playing an insulating role between the tab connection portion 120 and the end cover plate 210.

Within a value range of the first gap 240, the internal space of the housing may be fully utilized, which facilitates the arrangement of the structure, and avoids the interference generated between the adapting sheet 100 and the plastic part 211 during assembly. The first gap may be used to accommodate the insulating layer, i.e., a minimum thickness of the insulating layer is 0.1mm. The insulating layer is located at the first gap, allowing the adapting sheet 100 to be in contact with the end cover plate 210 through the insulating layer, thereby alleviating shaking of the adapting sheet 100 in an up-down direction.

For example, in some embodiments of the present disclosure, exemplarily, the first gap is N4, where 0.1mm≤N4≤0.8mm.

In some embodiments, the end cover assembly further includes an explosion-proof valve 250. The explosion-proof valve 250 is disposed at a middle of the end cover plate in the third direction (X direction). The explosion-proof valve 250 is spaced apart from pole 220 on the end cover plate 210 in the third direction (X direction). In the third direction, a distance between the pole 220 and the explosion-proof valve 250 is smaller than a minimum distance between the pole 220 and a side edge of the cell body 231. The side edge of the cell body 231 is a side edge close to the pole 220 in the third direction, and the pole 220 is located between the side of the cell body 231 and the explosion-proof valve 250. For example, when the third direction is a left-right direction, two poles 220 are provided on the end cover plate 210, which are respectively the positive pole and the negative pole. The positive pole is located at a left side of the explosion-proof valve 250, and the negative pole is located at a right side of the explosion-proof valve 250. A minimum distance between the positive pole and the left side edge of the cell body 231 is smaller than the distance between the positive pole and the explosion-proof valve 250, and a minimum distance between the negative pole and the right side edge of the cell body 231 is smaller than the distance between the negative pole and the explosion-proof valve 250.

Referring to FIG. 17, in this arrangement way, the pole 220 is disposed closer to a middle region of the cell body 231 and away from the edge of the cell body 231. Therefore, a greater space is reserved at a side of the pole 220 away from the explosion-proof valve 250, which is beneficial to subsequent loading of the pressing strip 20 that is configured to limit a position of the plurality of battery cells 10.

In some embodiments of the present disclosure, exemplarily, a dimension of the cell body 231 in a third direction (X direction) is L, and a minimum distance between the pole 220 and a side edge of the cell body 231 is M in the length direction of the cell body 231, where L/30≤M≤L/5 or M> 10mm.

The pole 220 in the battery cell 10 includes the positive pole and the negative pole. Both the positive pole and the negative pole satisfy a condition where the minimum distance between the pole 220 and the side edge of the cell body 231 is M, where L/30≤M≤L/5. On the basis of satisfying the above conditions, the minimum distance between the positive pole and the side edge of the cell body 231 may be the same as or different from the minimum distance between the negative pole and the side edge of the cell body 231. For example, the two sides of the explosion-proof valve 250 are respectively provided with the poles 220, one of which is the positive pole, and another one of which is the negative pole. By taking the third direction (X direction) as the left-right direction, the positive pole is located at the left side of the explosion-proof valve 250, and the negative pole is located at the right side of the explosion-proof valve 250. The distance between the positive pole and the left side of the battery cell 10 is M1, where L/30≤M1≤L/5 or M1 > 10mm. The distance between the negative pole and the left side edge of the battery cell 10 is M2, where L/30≤M≤L/5 or M2> 10mm; and M1 may be the same as or different from M2.

Within this dimension range, the pressing strip 20 is additionally mounted in a process where the battery cell 10 is subsequently assembled into the battery, and is disposed at the side of the pole 220 away from the explosion-proof valve 25. The position of the plurality of battery cells 10 is limited through the pressing strip 20. The pressing strips 20 may be provided at each of a side of the positive pole away from the explosion-proof valve 250 and a side of the negative pole away from the explosion-proof valve 250.

The pressing strip 20 may be added within the dimension range, and the position of the plurality of battery cells 10 is limited through the pressing strip 20. A width of the pressing strip 20 (a distance between two side edges of the pressing strip 20 in the length direction of the cell body 231) is smaller than M. Within a predetermined range, as the width of the pressing strip 20 increases, the greater a contact area between the pressing strip 20 and the end cover plate 210 of each battery cell 10, the better a position limiting effect. When M> 10mm, the width of the pressing strip 20 may be set to be 10mm or below, and a 10mm-wide pressing strip 20 may have a good position limiting effect.

According to a third embodiment, the present disclosure provides a battery including a case (not shown) and the battery cell 10 in the foregoing embodiments that is disposed at the case. The case is configured to provide an accommodation space for the battery cell 10 and may adopt diverse structures.

In the battery, there may be a plurality of battery cells 10, which can be connected in series, parallel, or a combination of both (referred to as mixed connection). The plurality of battery cells 10 may be directly connected in series, parallel, or mixed connection, and then is accommodated in the case as a whole. Certainly, the battery may also be formed as a battery module form consisting of the plurality of battery cells 10 first connected in series, parallel, or mixed connection, and then the plurality of battery modules is connected in series, parallel, or mixed connection to form a complete unit, which is accommodated in the case. The battery may also include other structures. For example, the battery may also include a busbar component for implementing an electrical connection between the plurality of battery cells 10.

Here, each battery cell 10 may be a rechargeable battery or a disposable battery; may also be a lithium-sulfur battery, a sodium-ion battery or a magnesium-ion battery, etc., and the embodiments of the present disclosure are not limited thereto. The battery cell 10 may be cylindrical, flat, rectangular, or other shapes

The battery includes the battery cell 10 provided in the above embodiments, and the adapting sheet 100 provided by the above embodiments is applied in the battery cell 10. In this case, in the width direction of the cell body 231, since the tab connection portion 120 of the adapting sheet 100 is located at the two sides of the pole connection portion 110, and the tab 232 is located at both sides of the pole 220, the tab connection portion 120 on the adapting sheet 100 is disposed opposite to the tab 232, facilitating the electrical connection. As the tab 232 is located at the two sides of the pole 220 in the width direction of the cell body 231, and the pole 220 and the explosion-proof valve 250 are disposed in the length direction of the battery cell 10, the tab 232 is located at a side of the explosion-proof valve 250 in the length direction of the battery cell 10. An arrangement dimension of the tab 232 in the length direction of the battery cell 10 is not limited to the distance between the pole 220 and the explosion-proof valve 250. Therefore, the dimension of the tab 232 in the length direction of the battery cell 10 may be set to be greater, thereby improving the fast-charging performance of the battery applying the battery cell 10.

In some embodiments of the present disclosure, exemplarily, the battery further includes a pressing strip 20 and a plurality of battery cells 10. The plurality of battery cells 10 is arranged in a matrix. End cover plates 210 of the plurality of battery cells 10 arranged in a same column are pressed by the pressing strips 20, and the pressing strips 20 are located at a side of the pole 210 in the end cover plate 210 away from the explosion-proof valve 250.

The plurality of battery cells 10 arranged in the same column is that the plurality of battery cells 10 is sequentially arranged in the first direction (Y direction).

By providing the pressing strip 20, fixation of the plurality of battery cells 10 arranged in the same column may be facilitated.

Exemplarily, provided are two pressing strips 20. The two poles 220 (the positive pole and the negative pole) are provided on the end cover plate 210 in the length direction of the end cover plate 210. The one pressing strip 20 is located at a side of one of the poles 220 of each battery cell 10 away from the explosion-proof valve 250, and the other pressing strip 20 is located at a side of the other pole 220 of each battery cell 10 away from the explosion-proof valve 250.

In a fourth embodiment, the present disclosure provides an electric apparatus, including the battery cell 10 in the above embodiments that is configured to provide electric energy or the battery in the above embodiments that is configured to provide electric energy.

When the electric apparatus includes the battery cell 10, the electric apparatus has at least all the beneficial effects of the battery cell 10. When the electric apparatus includes the battery, the electric device has at least all the beneficial effects of the battery, and details thereof will be omitted herein.

The electric apparatuses may be, but are not limited to, a cell phone, a tablet, a laptop computer, an electric toy, an electric tool, an electric scooter, an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

In the following embodiments, as an example, an electric apparatus according to an embodiment of the present disclosure is described as a vehicle for convenience of description. The vehicle may be a fuel vehicle, a gas vehicle, or a new energy vehicle. The new energy vehicle may be a battery electric vehicle, a hybrid electric vehicle, an extended range vehicle, or the like. A battery is disposed at the vehicle, and the battery may be disposed at a bottom or a head or a tail of the vehicle. The battery can be configured to supply power to the vehicle. For example, the battery may be used as an operational power source of the vehicle. The vehicle may further include a controller and a motor. The controller is configured to control the battery to supply power to the motor, e.g., for operational power needs in starting, navigation, and traveling of the vehicle.

In some embodiments of the present disclosure, the battery may not only serve as an operational power source of the vehicle, but also serve as a drive power source of the vehicle in lieu of, or in part in lieu of a fuel oil or a natural gas to provide drive power for the vehicle.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

## Claims

1. An adapting sheet, comprising:
a pole connection portion;
a tab connection portion; and
a bending portion, wherein:
in a first direction, two sides of the pole connection portion are respectively connected to the tab connection portion through the bending portion;
in a second direction, a height difference is formed between the pole connection portion and the tab connection portion, the first direction being non-parallel to the second direction.

2. The adapting sheet according to claim 1, wherein the pole connection portion has a same thickness as the tab connection portion, the thickness of the pole connection portion being N1, and the height difference between the pole connection portion and the tab connection portion being N2, where N1≤N2≤5*N1.

3. The adapting sheet according to claim 1 or 2, wherein a fusing portion is disposed between the pole connection portion and the tab connection portion and is configured to be fused during overcurrent of the adapting sheet.

4. The adapting sheet according to claim 3, wherein the fusing portion has at least one of a thinned region and a fusing hole.

5. The adapting sheet according to claim 3 or 4, wherein the fusing portion is disposed at the bending portion.

6. The adapting sheet according to any one of claims 3 to 5, wherein the fusing portion has a thinned region located at the fusing portion in an overcurrent direction of the fusing portion.

7. The adapting sheet according to any one of claims 3 to 6, wherein the fusing portion has a thinned region with a thickness N3, and the thickness of the pole connection portion being N1, where 1/3*N1≤N3≤5/6*N1.

8. The adapting sheet according to any one of claims 3 to 5, wherein the fusing portion has a fusing hole, a total volume of an inner cavity of the fusing hole being V1, and a volume of the fusing portion being V2, where 1/6*V2≤V1≤2/3* V2.

9. The adapting sheet according to any one of claims 3 to 8, further comprising an insulator covering an outer side of the fusing portion.

10. The adapting sheet according to claim 9, wherein:
the pole connection portion has a first side surface configured to be connected to a pole; and
the pole connection portion has a second side surface facing away from the first side surface, in the second direction, the insulator being disposed between the tab connection portion and a plane where the second side surface is located.

11. The adapting sheet according to claim 9 or 10, wherein:
the fusing portion has at least one of a thinned region and a fusing hole; and
the insulator comprises a filling portion, the filling portion being located at an outer side of the thinned region or filled in an inner cavity of the fusing hole.

12. The adapting sheet according to any one of claims 9 to 11, wherein the insulator is provided with a reinforcement rib at an outer side wall of the insulator.

13. The adapting sheet according to any one of claims 1 to 12, wherein in a third direction, the tab connection portion has a length greater than or equal to a length of the pole connection portion, the third direction being perpendicular to both the first direction and the second direction.

14. The adapting sheet according to any one of claims 1 to 12, wherein:
in a third direction, the tab connection portion has a length greater than a length of the pole connection portion, the third direction being perpendicular to both the first direction and the second direction; and
the pole connection portion is connected to an end of the tab connection portion through the bending portion or connected to a middle part of the tab connection portion through the bending portion.

15. The adapting sheet according to any one of claims 1 to 14, wherein the bending portion is of an arc-shaped plate-like structure.

16. The adapting sheet according to any one of claims 1 to 15, wherein:
the pole connection portion has a first side surface configured to be connected to a pole; and
the pole connection portion has a second side surface facing away from the first side, the second side surface having a plurality of recesses.

17. A battery cell, comprising the adapting sheet according to any one of claims 1 to 16.

18. The battery cell according to claim 17, further comprising:
a housing;
a cell assembly disposed in the housing and comprising a cell body and a tab connected to the cell body; and
an end cover assembly covering an opening of the housing and comprising a pole, each of two sides of the pole in a first direction being provided with the tab,
wherein the pole connection portion is electrically connected to the pole, and in the first direction, a tab connection portion at each of the two sides of the pole connection portion is electrically connected to a corresponding tab.

19. The battery cell according to claim 18, wherein the end cover assembly further comprises:
an end cover plate covering the opening; and
a plastic portion disposed at a side of the end cover plate facing the cell assembly, a first gap being formed between the tab connection portion and the plastic portion,
wherein a thickness of the pole connection portion is N1, and a dimension of the first gap is N4, where 0.1mm≤N4≤N1.

20. The battery cell according to claim 19, wherein the end cover assembly further comprises an explosion-proof valve spaced apart from the pole in a third direction perpendicular to both the first direction and the second direction, the explosion-proof valve being disposed in a middle of the end cover plate in the third direction, wherein in the third direction, a distance between the pole and the explosion-proof valve is smaller than a minimum distance between the pole and a side edge of the cell body.

21. The battery cell according to any one of claims 18 to 20, wherein:
a dimension of the cell body in a third direction perpendicular to both the first direction and the second direction is L; and
in the third direction, a minimum distance between the pole and a side edge of the cell body is M, where L/30≤M≤L/5 or M> 10mm.

22. A battery, comprising:
a case; and
the battery cell according to any one of claims 17 to 21, the battery cell being disposed at the case.

23. An electric apparatus, comprising:
the battery cell according to any one of claims 17 to 21, the battery cell being configured to provide electric energy; or
the battery according to claim 22, the battery being configured to provide electric energy.
